# EUROPEAN PATENT APPLICATION

(11) **EP 0 590 813 A1**
(43) Date of publication of application: **06.04.1994**
(21) Application number: 93307090.6
(22) Date of filing: 08.09.1993
(51) Int. Cl.: G01N 21/17

(54) **Gas analyser**

(30) Priority: 30.09.1992 GB 9220634
(71) Applicant: GEC-MARCONI LIMITED, Stanmore, Middlesex HA7 4LY (GB)
(72) Inventor: Langdon, Roger Martin, Colchester, Essex CO4 4PZ (GB)
(74) Representative: Rees, Alexander Ellison

(57) **Abstract**

A gas analyser employs a photoacoustic cell through which exhaust gases past. A plurality of modulated infra-red beams are incident on the cell, each at a frequency corresponding to an absorption band of a gas whose concentration is to be sensed. Each beam generates an acoustic signal at it's modulation frequency and the amplitude of the acoustic signal is used to calculate the concentration of the gas which absorbs that beam.

## Description

This invention relates to a gas analyser and in particular to a gas analyser for exhaust emission monitoring.

Exhaust emission monitoring of internal combustion engines, particularly those used in vehicles, is becoming more and more important as exhaust emission regulations become more restrictive.

The two main problems with gas analysers when used as exhaust emission monitors is that they must monitor a large number of different gases simultaneously and they must be able to measure them rapidly as they are being produced by the engine in order to allow fluctuations in the levels of different gases to be detected.

In order to fulfill these criteria, most gas analysers for exhaust emission monitoring have operated by passing a number of beams of electromagnetic radiation at different frequencies through a chamber containing the gases to be analysed, and measuring the intensity of these beams before and after their passage through the chamber. By using beams at the frequency of absorption bands of different gases, and by measuring the degree of attenuation of the beam, the concentration of the different gases in the sample can be calculated.

There is one major drawback with systems of this type and this is that the absorption coefficients of most the gases of interest are relatively low and as a result, very long path lengths through the exhaust gas mixture are necessary in order to produce sufficient attenuation for the system to be sensitive enough to be useful for exhaust emission monitoring. As a result, systems of this type are large, bulky and expensive and, due to the complex optics and long gas tubes they contain, tend to be fragile. These problems have limited their use for exhaust emission monitoring because of the cost and inconvenience of using the analysers.

This invention is intended to provide a gas analyser overcoming these problems, at least in part.

This invention provides a gas analyser comprising; a photoacoustic cell, a source of modulated infra-red radiation at a plurality of separate frequencies and a microphone, the photoacoustic cell containing a mixture of gases to be analysed and each of the frequencies of the infra-red radiation corresponding to an absorption band of a gas to be sensed and arranged such that the infra-red radiation is absorbed within the photoacoustic cell and generates an acoustic signal at its modulation frequency with an amplitude corresponding to the concentration of the gas in the mixture and this acoustic signal is converted into an electrical signal by the microphone.

Gas analysers employing the invention will now be described by way of example only with reference to the accompanying figures in which;
Figure 1 shows an exhaust gas analyser according to the invention,
Figure 2 shows an alternative form of photoacoustic cell suitable for use in the analyser of Figure 1,
Figure 3 shows second exhaust gas analyser according to the invention,
Figure 4 shows a detail of the modulator and filter of the analyser of Figure 3,
Figure 5A shows the exhaust gas analyser of Figure 3 with additional elements to allow it to sense oxygen,
Figure 5B shows a detail of the photoacoustic cell of the analyser of Figure 5A, and
Figure 5C shows an explanatory graph explaining the operation of the analyser of Figure 5A, identical parts having the same reference numerals throughout.

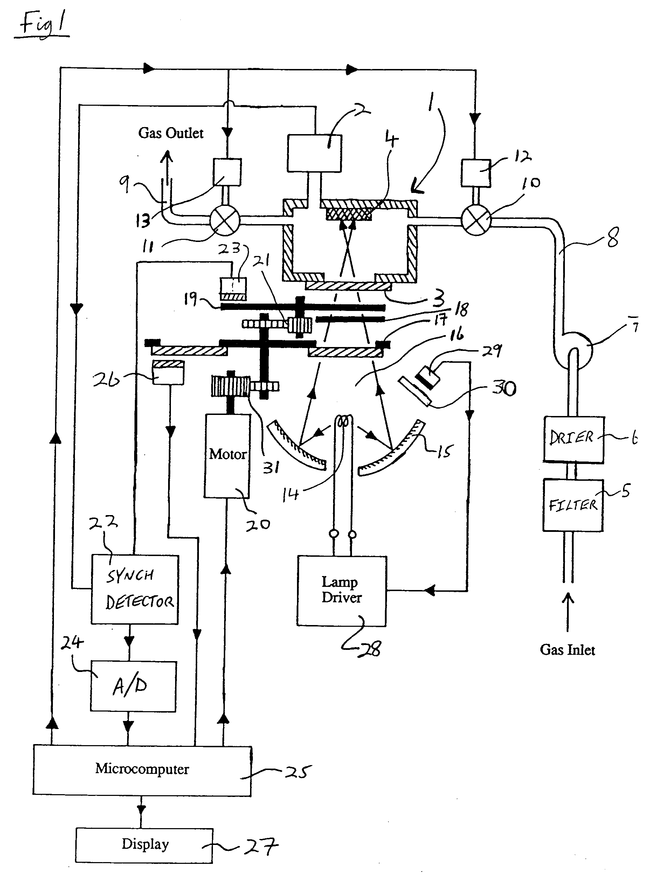

Referring to Figure 1 a first gas analyser intended to allow internal combustion engine exhaust emission monitoring is shown. The gas analyser comprises a cylindrical photoacoustic cell 1 linked to a microphone 2 and having one of its endfaces including an infra-red transparent window 3 and the other end face including an infra-red absorber 4.

Exhaust gases from an internal combustion engine exhaust (not shown) pass through a filter 5 and a dryer 6 and are pumped by a pump 7 into a gas inlet pipe 8 communicating with the photoacoustic cell 1. After analysis the gas passes out of the photoacoustic cell 1 to a gas outlet through a gas outlet pipe 9.

The passage of gas into and out of the photoacoustic cell 1 is controlled by a pair of valves, a first, inlet, valve 10 and a second, outlet, valve 11. The valves 10 and 11 are opened and closed by the electromagnetic servos 12 and 13 respectively.

The filter 5 removes solid particles from the exhaust gases in order to prevent fouling of the optical components of the system, and the dryer 6 removes the water vapour from the exhaust gases in order to prevent infra-red absorption by the water vapour effecting the measured concentrations of the other gases.

The photoacoustic cell 1 operates by modulated infra-red radiation at a frequency absorbed by a gas whose concentration is to be measured passing into the photoacoustic cell through the infra-red window 3. When this infra-red radiation passes through the gases including the gas which absorbs infra-red radiation at it's frequency within the photoacoustic cell 1, a portion of it is absorbed by the gas causing a rise in temperature. As is well known, a rise in the temperature of a gas produces a rise in it's pressure if it's volume is fixed. Thus as a result, acoustic waves are generated within the photoacoustic cell 1 by the incident radiation at the modulation frequency of the incident radiation, and these acoustic waves are picked up by the microphone 2. The interior of the photoacoustic cell 1 is acoustically isolated from the gas inlet and outlet pipes 8 and 9 by the inlet and outlet valves 10 and 11.

The gas analyser is intended to measure the concentrations of CO, CO₂, HC, N₂, NO and other oxides of nitrogen. In order to do this a plurality of infra-red beams at different frequencies are required. Each infra-red beam being at a frequency corresponding to an absorption band of one of the gases to be sensed.

All of the above gases which the gas analyser is to sense have absorption bands in the infra-red at frequencies which can be produced by filtering the output of an incandescent filament lamp.

An incandescent filament lamp 14 is situated adjacent a reflector 15 so as to generate a beam of radiation 16 which is incident on the infra-red transmissive window 3 of the photoacoustic cell 1. A suitable material for the infra-red transmissive window is magnesium fluoride or calcium fluoride. A sapphire window could be used if fewer gases were to be sensed but it does not have a wide enough transmission frequency range to allow all of the listed gases to be sensed.

The beam of radiation 16 passes through a rotating bank of filters 17, a fixed shutter plate 18 and a rotating shutter disk 19, and is then incident on the photoacoustic cell 1. The rotating shutter disk 19 and the bank of filters 17 are driven by an electric motor 20, and the rotating shutter disk 19 is linked to the bank of filters 17 by gearing 21, so that the shutter disk 19 rotates faster than the filters 17. The rotating shutter disk 19 and the fixed shutter plate 18 are arranged to generate a modulated beam of radiation from the continuous beam of radiation 16. This is achieved by the rotating code disk 19 and the fixed code plate 18 having a plurality of apertures 19A and 18A respectively separated by solid portions 19B and 18B respectively, the apertures and solid portions being of equal width. As the apertures 19A and solid portions 19B of the rotating code disk 19 pass the corresponding apertures 18A and solid portions 18B on the stationary code plate 18 the radiation passing through them is modulated in intensity at the frequency with which the apertures 19A of the rotating code disk 19 pass the apertures 18A in the fixed code plate 18, the modulation frequency of the beam being N x the rotational frequency of the code disk 19 where N is the number of apertures.

The rotating bank of filters 17 comprises a plurality of filters arranged to form a full circle, each being a segment of a circular annulus and each passing a different infrared frequency band. Thus each segment of the bank of filters 17 generates an infra-red beam at a different frequency.

The resulting modulated beam of infra-red radiation passes through the infra-red window 3 into the photoacoustic cell 1 and generates an acoustic signal at the modulation frequency produced by the rotating code disk 19.

The acoustic signal is converted into an analogue electrical signal by the microphone 2 and this analogue electrical signal is supplied to a synchronous detector 22. The synchronous detector 22 is also supplied with the signal from a rotation sensor 23 situated adjacent the rotating code disk 19. The rotation sensor 23 generates a signal each time one of the apertures 19A passes it, and is positioned such that this signal is generated simultaneously with the apertures 18A and 19A on the fixed coupler plate 18 and rotating code disk 19 respective being aligned to allow passage of the infra-red beam to the photoacoustic cell 1. The synchronous detector 22 uses these signals from the rotation sensor 23 to separate out the signal synchronised with the modulation of the infra-red beam in the output from the microphone 2 and generate a DC signal giving the amplitude of this sychronised signal only. It then passes this DC signal to an analogue to digital (A to D) converter 24 which digitises it and supplies it to a micro-computer 25 which acts as the control and data processing system for the entire gas analyser.

Alternatively the synchronous detector 22 could incorporate an adjustable phase shifter in the path of the signal from the rotation sensor 23 to adjust the phase of the signal relative to the signal from the microphone 2 to produce the maximum DC output from the synchronous detector 22.

The micro-computer 25 is supplied with the signal from a rotation sensor 26 which senses rotation of the bank of filters 17, this signal informs the micro-computer 25 which of the filters in the filter bank 17 the infra-red beam 16 is passing through. The micro-computer 25 contains a look-up table giving the conversion factors which should be used to convert the digital signal levels from the A to D converter 24 into gas concentration values for each of the filters in the filter bank 17, and which gas is having its concentrations sensed by this filter.

In operation each measurement cycle starts with the micro-computer 25 instructing the electro-magnetic servos 12 and 13 to open the gas valves 10 and 11. The new gas sample is then driven into the photoacoustic cell 1 by the pump 7, displacing the existing gas from the cell 1 and driving it out of the gas outlet. The microcomputer 25 then instructs the electromagnetic sensors 12 and 13 to close the gas valves 10 and 11, acoustically isolating the gas within the photoacoustic cell 1.

The micro-computer 25 then stores in memory the value of the signal supplied to it by the analogue to digital converter 24 from the microphone 2, for each of the filters in the filter bank 17 in turn, and converts each of these values into a gas concentration value using the appropriate conversion factors stored in the look up table. When concentration values have been produced corresponding to all the filters 17, the micro-computer 25 displays the gas concentration values for all of the filters on display 27. It is of course possible for the micro-computer to simultaneously store these values in its own memory or store them on some non-volatile storage medium such as a computer disk or paper printout. The micro-computer 25 then opens the valves 10 and 11 again and the process is repeated with a new gas sample.

If desired, the micro-computer 25 can retain a series of gas concentration values in memory and after a number of measurement cycles, produce an output based on all of these values. This output could be averages and maxima for example. Alternatively the micro-computer could compare the gas concentrations with values stored in memory, and simply indicate whether the measured values are above or below the values stored in memory. Where the values stored in memory are the legal maxima for gas concentrations this would provide a simple pass or fail for vehicle exhaust emission tests.

If the temperature of the incandescent lamp 14 varies, the relative intensities of the infra-red radiation it produces at different frequencies will alter, and this would cause the analyser to produce incorrect measurements of the concentrations of gases in the exhaust gas that is supplied to it. In order to avoid this problem, the voltage applied to the incandescent lamp 14 by a lamp driver circuit 28 is altered in response to the output of an optical sensor 29 which views the incandescent lamp 14 through an infra-red filter 30. The lamp driver circuit 28 is arranged to alter the voltage supply to the incandescent lamp 14 such that the intensity incident on the infra-red detector 29 remains constant.

One possible source of interference in this system is that vibration of the gas analyser due the operation of the motor 20 and rotating parts 17 and 19 could be picked up by the microphone 2. The fact that the code plate 18 and rotating code disk 19 each have a plurality of apertures, ensures that the frequency of modulation of the infra-red beam is well above the rotational frequency of the disk 19. However it is possible that harmonics of the vibrations generated by the rotating parts 17 and 19 and motor 20 could be at similar frequencies to the modulation frequency of the infrared beam 16, so gearing 31 is provided between the motor and the rotating filter bank 17, in addition to the gearing 21 between the filter bank 17 and the code disk 19, so that the relative speeds of rotation of these parts can be arranged so that their harmonics do not coincide with the variation frequency of the infra-red beams 16. The gearing 21 has the additional function of ensuring that the speed of rotation of the filter bank 17 is far enough below the modulation frequency of the infra-red beam that a sufficient number of cycles of the modulated infra-red beam occur during the passage of each of the filters in the filter bank 17 through the beam of radiation 16 for accurate measurement of the gas concentrations to be made.

The speed of rotation of the motor 20 is controlled by the micro-computer 25 which can deduce the speed of the motor 20 from the signals generated by the rotation sensor 26 because the gearing 31 between the motor 20 and the filter bank 17 has a fixed ratio. The micro-computer 25 acts to keep the speed of the motor 20 constant.

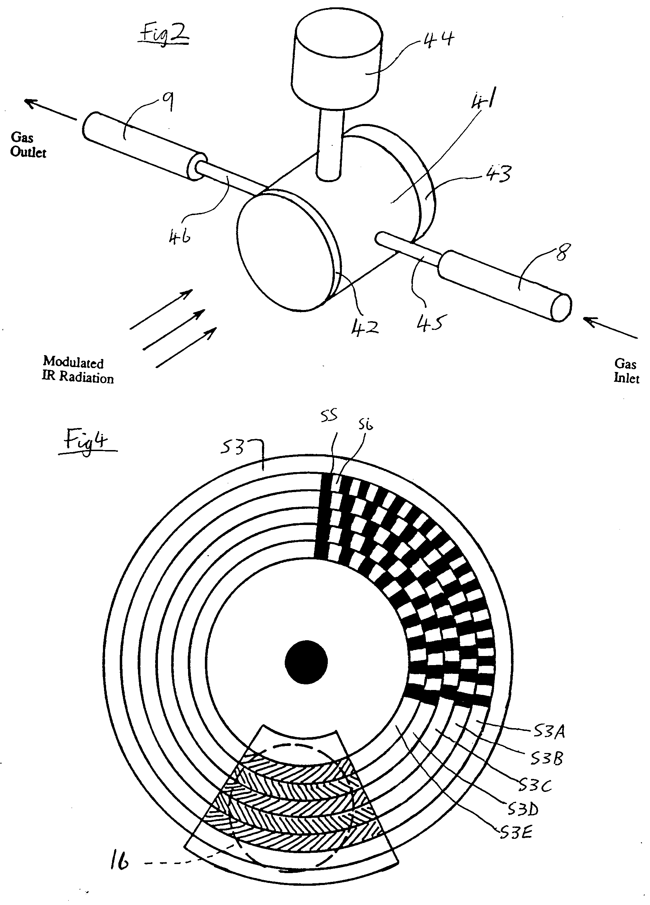

Referring to figure 2 an alternative form of photoacoustic cell 41 is shown.

The photoacoustic cell 41 is substantially cylindrical and has a first end face formed by an infra-red window 42 and a second end face formed by an infra-red absorber 43, a microphone 44 is mounted adjacent to the photoacoustic cell 41. The photoacoustic cell 41 is connected to a gas inlet pipe 8 and a gas outlet pipe 9 as before, but is not isolated by valves. Instead, the photoacoustic cell 41 is acoustically isolated from the gas inlet and outlet pipes 8 and 9 respectively by constrictions 45 and 46 in the gas inlet pipe 8 and gas outlet pipe 9 respectively.

The highest frequency of acoustic signal which will pass through a constriction in a pipe such as constrictions 45 and 46 can be calculated, and is dependant on the diameter and length of the constriction. This maximum transmitted frequency is generally referred to as the cut off frequency.

Provided the constrictions 45 and 46 are sized such that the cutoff frequency is below the modulation frequency of the modulated infra-red beam, the photoacoustic cell 41 will behave as a sealed chamber for the acoustic signals generated by the infra-red beam being absorbed, while simultaneously allowing gas to pass through the photoacoustic cell 41 from the inlet pipe 8 to the outlet pipe 9.

If this type of photoacoustic cell is used in the gas analyser shown in figure 1, the valves 10 and 11 and electro-magnetic servos 12 and 13 and their associated control leads can be eliminated, and exhaust gas can be continuously pumped through the photoacoustic sensor 41 by the pump 7.

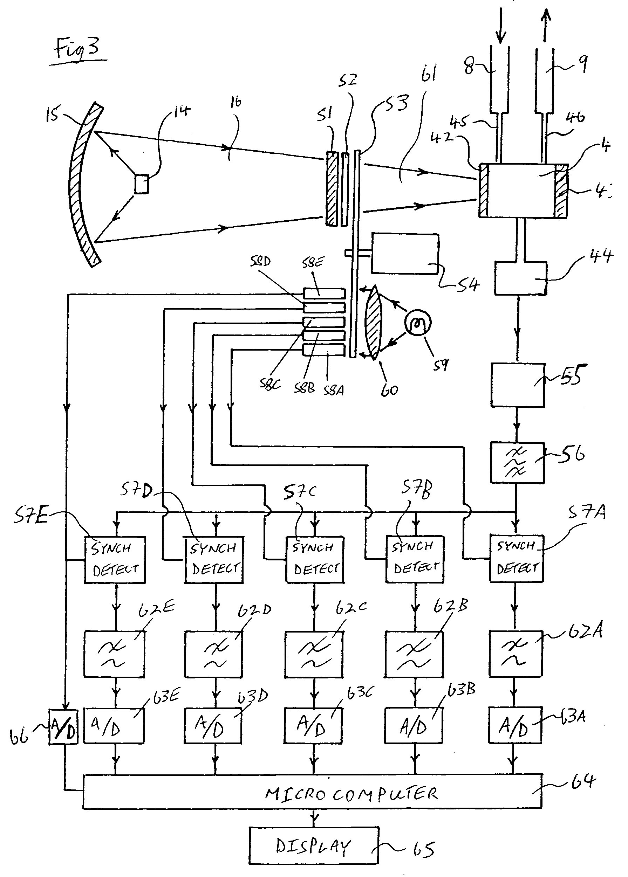

Referring to figure 3, a second form of gas analyser is shown. This comprises a photoacoustic cell 41 like that shown in figure 2 and supplied with a continuous through flow of exhaust gases from an internal combustion engine exhaust (not shown).

This continuous through flow could be generated by the pressure of the exhaust gases themselves, or a pump like the pump 7 in figure 1 could be used to increase the pressure. In either case a filter and dryer arrangement like that shown in figure 1 will be used.

An incandescent lamp 14 and reflector 15 are used to generate a beam of radiation 16 as before. A sensor and driver system equivalent to the elements 28 to 30 of Figure 1 will be needed to stabilise the output of the incandescent lamp 14, but this is omitted in figure 3 for clarity. The beam of radiation 16 passes through a static filter bank 51, a stationary code plate 52 and a rotating code disk 53. The rotating code disk 53 is rotated at a constant speed by an electric motor 54.

In order to allow the photoacoustic cell 41 to sense a plurality of gases simultaneously and so reduce the response time of the gas analyser, the filter bank 51, stationary code plate 52 and rotating code disk 53 are arranged to form a plurality of infra-red beams simultaneously from the beam of radiation 16, each of the plurality of infra-red beams having a different frequency and having a different modulation frequency. This is achieved by the stationary code plate 52 and the rotating code disk 53 being split into a plurality of annular tracks 53A to E and 52A to E respectively arranged at different radial distances from the axis of rotation of the rotating code disk 53.

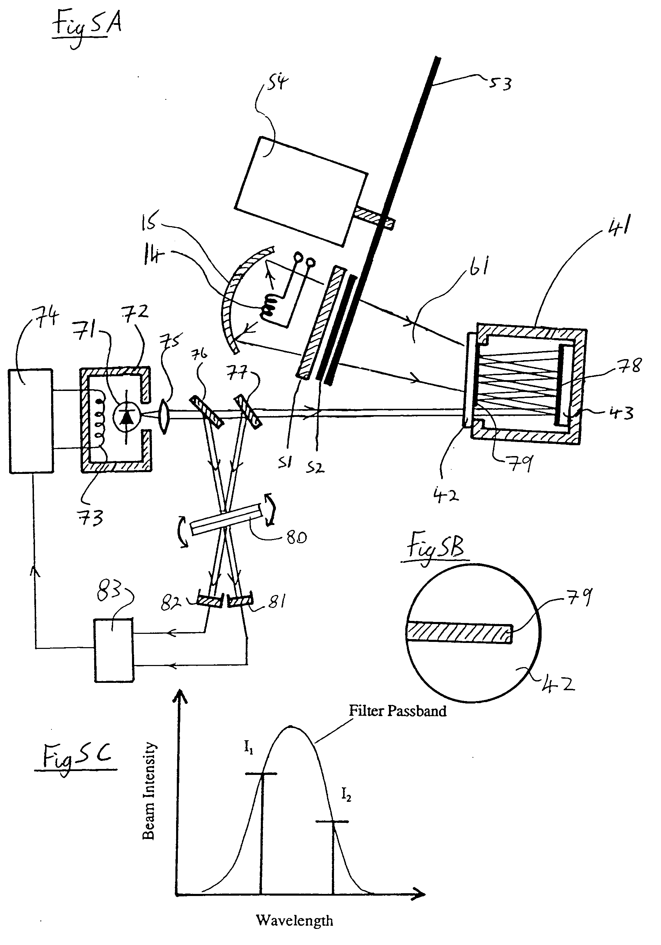

Referring to figure 4, the rotating code disk 53 is shown in more detail. The tracks 53A to 53E each have a plurality of apertures 55 and solid portions 56 arranged in a circular annulus. In each of the tracks 53A to 53E, the apertures 55, and solid portions 56 are the same size, and corresponding tracks 52A to 52E are arranged on the stationary code plate 52, track 52A being contiguous with track 53A and having equally sized apertures and solid portions to it. Similarly tracks 52B 53B, 52C 53C, 52D 53D and 52E 53E are also arranged in this way. Each of the tracks 53A to 53E has a different number of apertures 55, and as a result, when the rotating code disk 53 rotates relative to the stationery code plate 52, each of the tracks 53A to 53E generates a beam of radiation modulated at a different frequency. The filter bank 51 is split into a plurality of part annular tracks 51A to 51E each of which overlies a portion of one of the tracks 53A to 53E and 52A to 52E on the rotating code disk 53 and the stationary code plate 52 respectively. Each of the tracks 51A to 51E is a filter allowing only infra-red radiation in a different frequency band to pass through it. All the filter tracks 51A to 51E have different frequency pass bands and each of the frequency pass bands corresponds to an absorption band of one of the gases which the gas analyser is intended to sense. The beam of radiation 16 falls on the filter 51, code plate 52 and code disk 53 so that each of the tracks A to E generates an infra-red beam 61A to 61E at a different frequency and having a different modulation frequency.

The system shown has five tracks A to E and can simultaneously sense the concentrations of five different gases, CO, CO2, HC, N2, and NO. Clearly further tracks
could be added as desired to increase the number of gases which can be sensed.

All of the beams 61 pass through the infra-red window 42 and into the photoacoustic sensor 41 where they are simultaneously absorbed by the gases within the photoacoustic cell 41, and each beam generates an acoustic signal at its modulation frequency.

All these acoustic signals are simultaneously detected by the microphone 44 which converts them into an analogue electrical signal which is supplied to an amplifier 55. The amplified signal is then supplied to the band pass filter 56 with a pass band set to cover all of the modulation frequencies of the infra-red beams 61. This amplified filtered signal is then supplied to a plurality of synchronous detectors 57A to 57E. Each of the synchronous detectors 57A to 57E are also each provided with a signal by a corresponding photo-detector 58A to 58E.

A lamp 59 and lens 60 generate a beam of light which passes through the rotating code disk 53 and is then incident on the photo-detectors 58A to 58E, each of the photo-detectors 58A to 58E being situated adjacent one of the tracks 53A to 53E on the rotating code disk 53 with the code sensor 58A adjacently track 53A and so on, and the photo-sensors 58A to 58E are mounted relative to the rotating code disk 53 such that the signals they generate as the light beam from the lamp 59 is incident on them are modulated in synchronism with the modulation of the infra-red beams also generated by the rotating code disk 53.

As in the example of Figure 1, a variable phase shifter could be placed between each of the photodetectors 58 and it's corresponding synchronous detector 57.

The synchronous detectors 57A to 57E take out from the amplified filtered signal from the microphone 44 the parts synchronised with the signal from their respective photo-sensor 58A to 58E such that each of the synchronous detectors 57A to 57E generates a DC signal whose voltage is proportional to the amplitude of the acoustic signal generated by the corresponding infrared beam 61A to 61E. The output of each of the synchronous detectors 57A to 57E is supplied to a corresponding low pass filter 62A to 62E having a cut off frequency of a few hertz which removes any remaining modulation. Each of these filtered signals is then passed to a corresponding analogue to digital converter 63A to 63E. The digitised signals are then all supplied to a micro-computer 64 which applies appropriate scaling factors to calculate the gas concentrations from these values and then displays the gas concentrations on the display 65.

The micro-computer 64 is also supplied with a signal from the photo-sensor 58E after digitisation by analogue to digital converter 66 so that the micro-computer 64 can determine the speed of rotation of the rotating code disk 53 and adjust the speed of the motor 54 to keep the speed of rotation of the rotating code disk 53 approximately constant.

As before, it would have of course be possible for the calculated gas concentrations to be printed out rather than displayed or be stored, so that the averages of or variations in the concentrations of the different gases over a period of time could be calculated and displayed.

In some circumstances it is desirable to be able to measure concentrations of oxygen as well as the other gases listed. This cannot be done by simply adding an extra track to the system shown in figure 3 because gaseous oxygen does not have a sufficiently strong infra-red absorption band. Instead it has a plurality of closely grouped absorption lines so if a band pass filter is used to generate an infra-red beam at the frequencies of this group of absorption lines, it is found that only a very small proportion of the energy in the infra-red beam falls within the absorption lines as opposed to the gaps between them, and hence the total proportion of the radiation absorbed is very low. As a result the sensitivity of the gas analyser to oxygen will be very much lower than its sensitivity to the other gases. In practice it has been found that the sensitivity of the analyser to oxygen is so much lower than its sensitivity to other gases that it is not possible to pick out the signal due to oxygen from background noise.

Oxygen does however have narrow absorption lines in the infra-red which are sufficiently strong to allow the oxygen concentration is to be measured in a photoacoustic cell. This requires the use of a modulated laser beam having a frequency bandwidth equal to or less than the width of the absorption line.

Referring to figure 5 a system able to sense oxygen concentrations in addition to the concentrations of other gases is shown.

This comprises a photoacoustic cell 41 and other apparatus for sensing exhaust gases as shown in figure 3, much of this has been omitted in figure 5A for clarity.

In order to allow oxygen concentrations to be sensed a gallium aluminum arsenide laser diode 71 is used. Gallium aluminium arsenide (GAAS) laser diodes are available producing wavelengths in the region 700 to 780 nanometers and can have their wavelength tuned over a range of a few nanometers by changing their operating temperature. By selecting suitable GAAS laser diodes after manufacture, GAAS laser diodes with a wavelength around the 760 nanometer oxygen absorption band can be selected. As explained above, the oxygen absorption band is in fact a plurality of closely spaced very narrow absorption lines and the laser diode 71 can be tuned to one of these absorption lines, such as the 760.4 nanometer absorption line, by adjusting its temperature. In order to allow this the laser diode 71 is situated within an oven 72 and the temperature of the oven 72 is controlled by varying the voltage supplied to a heating element 73 within the oven 72 by a variable voltage supply 74. The laser beam emitted by the laser diode 71 is collimated by a lens 75 and then passes through a pair of partial reflectors 76 and 77 formed by optically flat panes of glass. The part of the laser beam passing through both partial reflectors 76 and 77 is incident on the photoacoustic cell 41 passing through the infra-red window 42 and is then absorbed generating an acoustic signal which is picked up by the microphone 44 (not shown). The laser beam is modulated by modulating the power supply to the laser diode 71. By arranging this modulation frequency to be different from that of all the other infra-red beams 61 incident on the photoacoustic cell 41, the acoustic signal due to absorption of the laser beam by the oxygen within the photoacoustic cell 41 can be distinguished from the other acoustic signals.

It may be found that even with the laser beam tuned to one of the oxygen absorption lines the sensitivity of the gas analyser to oxygen is still relatively low, in order to increase this sensitivity reflecting strips 78 and 79 can be placed on the infra-red absorber material 43 and the rear face of the infra-red window 42 respectively so that the laser beam is reflected between them and passes through the photoacoustic cell 41 several times, thus increasing the path length and the amount of energy absorbed and so increasing the size of the acoustic signal generated, see Figure 5B. Because of the relatively small diameter of a collimated laser beam it is possible to do this without the reflective strip 79 significantly effecting the sensitivity of the photoacoustic cell to the other infra-red beams 61.

The partial reflectors 76 and 77 form part of a feedback circuit which keeps the wavelength of the radiation emitted by the laser diode 71 on the selected oxygen absorption line at 760.4 nanometers. The two beams reflected from the two partial reflectors 76 and 77 pass through a filter 80 and are then incident on a pair of photodetectors 81 and 82 respectively. The beam from the reflector 76 being incident on the photodetector 81 and the beam from the reflector 77 being incident on the photodetector 82. The two beams are arranged to converge at an angle of approximately 2 degrees at the filter 80.

The filter 80 is a thin film filter with a pass band centered just above 760.4 nanometers and arranged to be tiltable, as shown by the arrows, relative to the laser beams passing through it. The central wavelength of the filter can be fine tuned by tilting it to an appropriate angle relative to the laser beams because it is a thin film filter and so its pass band will vary in dependence on the angle of incident radiation. Once this angle has been set initially it is not necessarily to adjust it again in operation.

Although the filter has a pass band much larger than the spectral width of the laser emission it is possible to measure the precise wavelength of the laser output by measuring the relative intensities of the light striking the two photosensors 81 and 82, which corresponds to the relative intensity of two beams passed by the filter 80. The means for doing this are illustrated in Figure 5C which shows a graph of transmitted intensity against wavelength for the filter 80. The relative intensities I1 and I2 of the transmitted beams incident on the photosensors 81 and 82 respectively depend on the wavelength emitted by the laser diode 71 and the angles of incidence of the two beams on the filter 80. The angles of incidence of the two beams are arranged such that they are on either side of the transmission maximum of the filter 80 so that the ratio of the intensities I1 and I2 will vary in dependence on the laser wavelength only.

The signals from the photosensors 81 and 82 are compared in a ratio circuit 83 which instructs the variable voltage supply 74 to alter the voltage supply to the element 73 of the oven 72 in order to bring the ratio of the intensities I1 and I2 back to an optimum value corresponding to the emission wavelength of the laser diode 71 being exactly 760.4 nanometers.

The additional apparatus to allow oxygen sensing could of course be added to the gas analyser of figure 1 as easily as it could to a gas analyser of figure 3.

Instead of using synchronous detectors the output from the microphones could be digitised and then fast fourier transformed in order to find its intensity at different frequencies.

The conversion factors used by the microcomputers 25 and 64 to calculate the gas concentrations from the acoustic signal amplitude values will have to be more than simple multiplication factors in order to allow for the fact that the amount of energy absorbed by a gas does not rise linearly with its concentration. The necessary conversion factors are easily calculated.

Instead of using rotating code disks or filter banks, oscillating encoders or filter banks could be used. alternatively the rotating code disks and static code plates could be replaced with solid state modulators such as Bragg cells or liquid crystal shutters.

Laser beams at appropriate frequencies could be used to allow sensing of any of the listed gases instead of employing a band pass filter to generate a beam having an appropriate frequency band, but this would not normally be economic.

## Claims

1. A gas analyser comprising; a photoacoustic cell, a first source of modulated infra-red laser radiation and a microphone, the photoacoustic cell containing a mixture of gases to be analysed and the frequency of the infra-red laser radiation corresponding to an absorption band of oxygen and arranged such that the infra-red laser radiation is absorbed within the photoacoustic cell and generates an acoustic signal at its modulation frequency with an amplitude corresponding to the concentration of oxygen in the mixture and this acoustic signal is converted into an electrical signal by the microphone.

2. A gas analyser as claimed in claim 1 and additionally comprising a second source of modulated infra-red radiation at a plurality of seperate frequencies, each of the frequencies corresponding to an absorbtion band of a gas to be sensed and arranged so that the infra-red radiation is absorbed within the photoacoustic cell and each frequency generates an acoustic signal at its modulation frequency with an amplitude corresponding to the concentration of the gas in the mixture and all of the acoustic signals are converted into electrical signals to the microphone.

3. A gas analyser as claimed in claim 2 in which the second source of modulated infra-red radiation comprises a broad spectrum electromagnetic radiation source, a modulator and plurality of band pass filters passing different infra-red frequency bands.

4. A gas analyser as claimed in claim 3 in which the modulator modulates the infra-red radiation at a constant frequency and the band pass filters are moved to sequentially generate a plurality of infra-red beams each having a different infra-red frequency band.

5. A gas analyser as claimed in claim 3 in which the modulator and band pass filters generate a plurality of infra-red beams simultaneously, each beam having a different infra-red frequency band and a different modulation frequency.

6. A gas analyser as claimed in any preceding claim in which the mixture of gases is the exhaust from an internal combustion engine.

7. A gas analyser as claimed in any preceding claim in which gas enters and leaves the photoacoustic cell through pipes containing constrictions which acoustically isolate the gases within the photoacoustic cell.

8. A gas analyser as claimed in claim 3 in which the broad spectrum electromagnetic radiation source is an incandescent lamp.

9. A gas analyser as claimed in claim 1 in which the first source is a gallium aluminium arsenide (GAAS) laser.

10. A gas analyser as claimed in claim 9 in which the laser is tuned to the frequency of an oxygen absorption line by varying its temperature.

11. A gas analyser as claimed in claim 10 and additionally including a first and a second partial reflector, a first and a second infra-red sensor, a thin film filter and control means controlling the temperature of the laser arranged such that the partial reflectors are in the path of the laser beam so that a pair of reference laser beams are generated in addition to the laser beam passing into the photoacoustic cell, the reference laser beams being non-parallel and passing through the thin film filter before each being incident on one of the infra-red sensors, and the control means controlling the laser temperature in dependence on the output of the infra-red sensors.
